# EUROPEAN PATENT APPLICATION

(11) **EP 4 826 866 A1**
(43) Date of publication of application: **21.10.2026**
(21) Application number: 26163962.9
(22) Date of filing: 11.03.2026
(51) Int. Cl.: H01M 50/204, H01M 50/209, H01M 50/342, H01M 50/383

(54) **BATTERY PACK**

(30) Priority: 07.04.2025 KR 20250044616
(71) Applicant: SAMSUNG SDI CO., LTD., Yongin-si, Gyeonggi-do 17084 (KR)
(72) Inventor: YOON, Gwangtaek, 17084 Yongin-Si Gyeonggi-do (KR)
(74) Representative: Gulde & Partner

(57) **Abstract**

A battery pack includes: a plurality of battery cells along a first direction; a housing having an opening at one side, and accommodating the plurality of battery cells; a cover coupled to the housing and covering the opening; and a fire-resistant barrier assembly below the cover, and including: a fire-resistant barrier having one end connected to the cover, and extending in the first direction; a metal weight at another end of the fire-resistant barrier; and a fixing member fixing the fire-resistant barrier in a rolled state or a folded state. The fixing member is to melt at a temperature greater than or equal to a threshold, and the fire-resistant barrier is to unfold or unroll to shield a space between the plurality of battery cells when the fixing member is melted.

## Description

### BACKGROUND

### 1. FIELD

Aspects of embodiments of the present disclosure relate to a battery pack.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles, and for storing power (e.g., home and/or utility scale power storage). A secondary battery generally includes an electrode assembly composed of a positive electrode and a negative electrode, a case accommodating the electrode assembly, and electrode terminals connected to the electrode assembly.

A secondary battery contains various flammable materials, and therefore, may pose risks of heat generation and explosion that may be caused by overcharge, overcurrent, or external physical impacts. For example, heat may be generated during charging or discharging of the secondary battery. If the heat generation continues, a thermal runaway of the secondary battery may progress, and a fire may occur in a device or system that houses the secondary battery.

In a battery module or a battery pack that includes a plurality of secondary batteries, a fire may occur inside the battery module or the battery pack due to an external impact or an abnormal operation of an internal battery cell. When a fire occurs inside the battery module or the battery pack, an ignition or an explosion generated in some battery cells may sequentially propagate to other battery cells, causing serious problems. Therefore, when an ignition or an explosion occurs in some battery cells, it may be desirable to block or delay an influence on the other battery cells.

The above information disclosed in this Background section is for enhancement of understanding of the background of the present disclosure, and therefore, it may contain information that does not constitute related (or prior) art.

### SUMMARY

One or more embodiments of the present disclosure may be directed to a battery pack having improved safety.

These and other aspects and features of the present disclosure will be described in, or will be apparent from, the following description of some embodiments of the present disclosure. The present invention is set out in the appended set of claims, wherein the drawings and respective descriptions relate to advantageous embodiments thereof.

According to one or more embodiments of the present disclosure, a battery pack includes: a plurality of battery cells along a first direction; a housing having an opening at one side, and accommodating the plurality of battery cells; a cover coupled to the housing and covering the opening; and a fire-resistant barrier assembly below the cover, and including: a fire-resistant barrier having one end connected to the cover, and extending in the first direction; a metal weight at another end of the fire-resistant barrier; and a fixing member fixing the fire-resistant barrier in a rolled state or a folded state. The fixing member is configured to melt at a temperature greater than or equal to a threshold, and the fire-resistant barrier is configured to unfold or unroll to shield a space between the plurality of battery cells when the fixing member is melted.

In an embodiment, the battery pack may further include a magnetic member below the metal weight.

In an embodiment, the metal weight may be configured to descend and attach to the magnetic member when the fire-resistant barrier unfolds or unrolls.

In an embodiment, the plurality of battery cells may include a first battery cell group and a second battery cell group spaced from each other in a second direction crossing the first direction.

In an embodiment, the fire-resistant barrier assembly may include a first fire-resistant barrier assembly between the first battery cell group and the second battery cell group.

In an embodiment, a length of the fire-resistant barrier in the first direction may be greater than a length of the first battery cell group in the first direction and a length of the second battery cell group in the first direction.

In an embodiment, the housing may include: a partition wall between the first battery cell group and the second battery cell group.

In an embodiment, the magnetic member may be on an upper surface of the partition wall.

In an embodiment, the first fire-resistant barrier assembly may include a (1_1)-th fire-resistant barrier assembly and a (1_2)-th fire-resistant barrier assembly adjacent to each other in the second direction.

In an embodiment, the fire-resistant barrier assembly may further include: a second fire-resistant barrier assembly and a third fire-resistant barrier assembly located outside the first battery cell group and the second battery cell group.

In an embodiment, the housing may include a stepped portion below the second fire-resistant barrier assembly, and a stepped portion below the third fire-resistant barrier assembly.

In an embodiment, the magnetic member may be on an upper surface of the stepped portions.

In an embodiment, the metal weight may include a plurality of sub-metal weights spaced from each other in the first direction.

In an embodiment, the fixing member may have a melting point greater than or equal to 100°C.

In an embodiment, the fixing member may include a polymer-based material.

In an embodiment, the fire-resistant barrier may be in a rolled state having a roll form, and the metal weight may be at a center of the fire-resistant barrier when the fire-resistant barrier is in the rolled state.

In an embodiment, the fire-resistant barrier may be in a folded state having a zigzag form, and the metal weight may be below the fire-resistant barrier when the fire-resistant barrier is in the folded state.

In an embodiment, the fixing member may surround around at least a portion of the fire-resistant barrier.

In an embodiment, the fire-resistant barrier may include at least one of an aramid fiber, a polybenzimidazole fiber (PBI), a silica fabric, a ceramic fiber, a carbon fiber, or a graphite fiber.

In an embodiment, each of the plurality of battery cells may include: a case; an electrode assembly accommodated inside the case; and a cap plate sealing the case.

According to some embodiments of the present disclosure, a battery pack having improved safety may be provided.

According to some embodiments of the present disclosure, when an abnormal operation occurs in some of a plurality of battery cells, an ignition or an explosion generated in some battery cells may be blocked or delayed from affecting other battery cells, thereby providing a battery pack having improved safety.

According to some embodiments of the present disclosure, when a fire caused by a battery ignition occurs inside the battery pack, a releasing of the fixing of a fixing member that retains a fire-resistant barrier may allow the fire-resistant barrier to unfold and shield a space between the plurality of battery cells, so that the fire in the battery pack may be suppressed at an early stage (e.g., may be suppressed earlier).

According to some embodiments of the present disclosure, because a fire-resistant barrier may unfold uniformly or substantially uniformly, the shape of the fire-resistant barrier may remain intact, and a space between the plurality of battery cells may be completely shielded, thereby reliably suppressing the fire in the battery pack.

According to some embodiments of the present disclosure, a flame generated in the plurality of battery cells may be prevented from being exposed to the outside the battery pack, and an oxygen supply may be blocked to extinguish the flame generated in the plurality of battery cells.

However, the present disclosure is not limited to the above aspects and features, and the above and additional aspects and features will be set forth, in part, in the detailed description that follows with reference to the drawings, and in part, may be apparent therefrom, or may be learned by practicing one or more of the presented embodiments of the present disclosure.

### BRIEF DESCRIPTION OF DRAWINGS

The above and other aspects and features of the present disclosure will be more clearly understood from the following detailed description of the illustrative, non-limiting embodiments with reference to the accompanying drawings.
FIG. 1 is an exploded perspective view illustrating a battery pack according to an embodiment of the present disclosure.
FIGS. 2 and 3 are schematic diagrams illustrating a first fire-resistant barrier assembly according to some embodiments of the present disclosure.
FIG. 4 is a schematic diagram illustrating an operation of a fire-resistant barrier assembly according to an embodiment of the present disclosure.
FIG. 5 is a top view illustrating a battery pack according to an embodiment of the present disclosure.
FIG. 6 is a schematic diagram illustrating an operation of a fire-resistant barrier assembly according to an embodiment of the present disclosure.
FIG. 7 is a schematic diagram illustrating a first fire-resistant barrier assembly formed of a plurality of assemblies according to an embodiment of the present disclosure.
FIG. 8 is a schematic diagram illustrating an operation of a fire-resistant barrier assembly according to an embodiment of the present disclosure.
FIG. 9 is a schematic diagram illustrating a second fire-resistant barrier assembly and a third fire-resistant barrier assembly disposed outside of battery cells according to an embodiment of the present disclosure.
FIG. 10 is a schematic diagram illustrating an operation of a fire-resistant barrier assembly according to an embodiment of the present disclosure.

### DETAILED DESCRIPTION

Hereinafter, embodiments will be described in more detail with reference to the accompanying drawings, in which like reference numbers refer to like elements throughout. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described. Unless otherwise noted, like reference numerals denote like elements throughout the attached drawings and the written description, and thus, redundant description thereof may not be repeated.

When a certain embodiment may be implemented differently, a specific process order may be different from the described order. For example, two consecutively described processes may be performed at the same or substantially at the same time, or may be performed in an order opposite to the described order.

Further, as would be understood by a person having ordinary skill in the art, in view of the present disclosure in its entirety, each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner, unless otherwise stated or implied.

In the drawings, the relative sizes, thicknesses, and ratios of elements, layers, and regions may be exaggerated and/or simplified for clarity. Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly.

Further, it should be expected that the shapes shown in the figures may vary in practice depending, for example, on tolerances and/or manufacturing techniques. Accordingly, the embodiments of the present disclosure should not be construed as being limited to the specific shapes shown in the figures, and should be construed considering changes in shapes that may occur, for example, as a result of manufacturing. As such, the shapes shown in the drawings may not depict the actual shapes of areas of the device, and the present disclosure is not limited thereto.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, and the like as being "the same" as each other may mean that they are "substantially the same" as each other. Thus, the phrase "substantially the same" may include a case having a deviation or a variation that is considered low in the art, for example, such as a deviation or a variation of 5% or less. In addition, when a certain parameter is referred to as being uniform in a given region, it may mean that it is uniform in terms of an average.

In the figures, the x-axis, the y-axis, and the z-axis are not limited to three axes of the rectangular coordinate system, and may be interpreted in a broader sense. For example, the x-axis, the y-axis, and the z-axis may be perpendicular to or substantially perpendicular to one another, or may represent different directions from each other that are not perpendicular to one another.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section.

It will be understood that when an element or layer is referred to as being "on," "connected to," or "coupled to" another element or layer, it can be directly on, connected to, or coupled to the other element or layer, or one or more intervening elements or layers may be present. Similarly, when a layer, an area, or an element is referred to as being "electrically connected" to another layer, area, or element, it may be directly electrically connected to the other layer, area, or element, and/or may be indirectly electrically connected with one or more intervening layers, areas, or elements therebetween. In addition, it will also be understood that when an element or layer is referred to as being "between" two elements or layers, it can be the only element or layer between the two elements or layers, or one or more intervening elements or layers may also be present.

The terminology used herein is for the purpose of describing particular embodiments and is not intended to be limiting of the present disclosure. As used herein, the singular forms "a" and "an" are intended to include the plural forms as well, unless the context clearly indicates otherwise. It will be further understood that the terms "comprises," "comprising," "includes," "including," "has," "have," and "having," when used in this specification, specify the presence of the stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. For example, the expression "A and/or B" denotes A, B, or A and B. Expressions such as "at least one of," when preceding a list of elements, modify the entire list of elements and do not modify the individual elements of the list. For example, the expression "at least one of a, b, or c," "at least one of a, b, and c," and "at least one selected from the group consisting of a, b, and c" indicates only a, only b, only c, both a and b, both a and c, both b and c, all of a, b, and c, or variations thereof.

As used herein, the term "substantially," "about," and similar terms are used as terms of approximation and not as terms of degree, and are intended to account for the inherent variations in measured or calculated values that would be recognized by those of ordinary skill in the art. Further, the use of "may" when describing embodiments of the present disclosure refers to "one or more embodiments of the present disclosure." As used herein, the terms "use," "using," and "used" may be considered synonymous with the terms "utilize," "utilizing," and "utilized," respectively.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

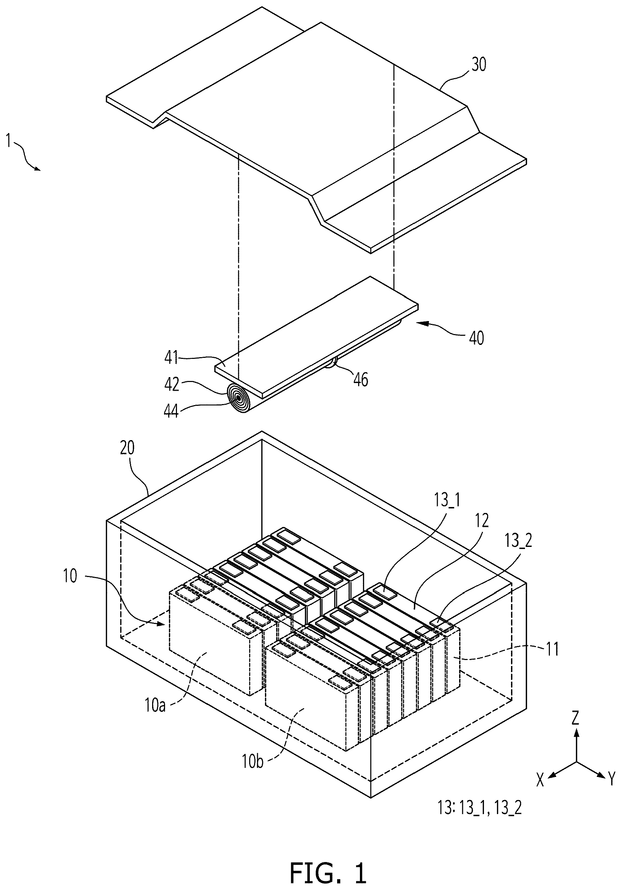

FIG. 1 is an exploded perspective view illustrating a battery pack according to an embodiment of the present disclosure.

Referring to FIG. 1, a battery pack 1 according to an embodiment of the present disclosure includes a plurality of battery cells 10, a housing 20, a cover 30, and a fire-resistant barrier assembly 40. As used herein, the term "battery pack" may denote a battery module.

The plurality of battery cells 10 may be arranged along a first direction (e.g., the X-axis direction). Although FIG. 1 illustrates the battery pack 1 as including sixteen battery cells 10, the present disclosure is not limited thereto. Accordingly, the battery pack 1 may include a single battery cell 10 or more, or seventeen or more battery cells 10. In addition, the battery cells 10 may be connected to each other in series or in parallel.

The plurality of battery cells 10 may include a first battery cell group 10a and a second battery cell group 10b that are spaced apart from each other in a second direction (e.g., the Y-axis direction) crossing or orthogonal to the first direction (e.g., the X-axis direction). As an example, each of the first battery cell group 10a and the second battery cell group 10b may constitute a battery module. In each of the first battery cell group 10a and the second battery cell group 10b, the plurality of battery cells 10 may be arranged along the first direction (e.g., the X-axis direction), such that broad surfaces of adjacent battery cells face each other. The first battery cell group 10a and the second battery cell group 10b may be electrically connected to each other, and may be connected in series, in parallel, or in a series-parallel hybrid manner to obtain a desired electrical output.

Each of the plurality of battery cells 10 may include a case 11, an electrode assembly accommodated in the case 11, and a cap plate 12 sealing the case 11. The plurality of battery cells 10 may be, for example, prismatic batteries. In this case, prismatic battery cells 10 may be stacked side by side with each other, and may be included in the battery pack 1 in a suitable arrangement along the first direction. The plurality of battery cells 10 may be arranged side by side with each other, and electrode terminals 13, which include a positive electrode terminal 13-1 and a negative electrode terminal 13-2, may be arranged and connected in various suitable ways depending on the design or configuration. For example, as shown in FIG. 1, the positive electrode terminal 13-1 and the negative electrode terminal 13-2 may be disposed on left and right sides, respectively, of the cap plate 12, and a vent may be provided between the positive electrode terminal 13-1 and the negative electrode terminal 13-2. However, the present disclosure is not limited thereto, and the battery cell 10 may also be a pouch-kind of battery, a cylindrical battery, or the like, without being limited thereto.

The case 11 may form the overall outer appearance of the battery cell 10, and may be made of a conductive metal, such as aluminum, an aluminum alloy, or a nickel-plated steel. In addition, the case 11 may provide a space in which the electrode assembly is accommodated.

The cap plate 12 may cover an opening of the case 11, and the case 11 and the cap plate 12 may be formed of various suitable conductive materials. The positive and negative electrode terminals 13-1 and 13-2 electrically connected to a positive electrode or a negative electrode may be provided, so as to protrude outward through the cap plate 12.

In addition, the positive and negative electrode terminals 13_1 and 13_2 protruding outwardly from the cap plate 12 may have a rivet structure, and may be riveted or welded to the cap plate 12.

The cap plate 12 may be made of a thin plate, and may be coupled to the opening in the case 11. An electrolyte injection port into which a sealing stopper may be installed may be located (e.g., may be formed) in the cap plate 12, and a vent portion having a notch may be installed or disposed.

The plurality of battery cells 10 may be lithium battery cells, sodium battery cells, or the like. However, the present disclosure is not limited thereto, and the plurality of battery cells 10 may include all suitable kinds of batteries that may repeatedly provide electricity through charging and discharging. According to an embodiment, when the plurality of battery cells 10 are lithium battery cells, they may have excellent lifespan characteristics and high-rate characteristics to be used in electric vehicles (EVs). For example, they may be used in hybrid vehicles, such as plug-in hybrid electric vehicles (PHEVs). In addition, lithium battery cells may be used in various suitable fields requiring or desiring storage of a large amount of power, for example, such as in electric bicycles, power tools, and energy storage systems (ESSs).

The housing 20 includes an opening at one side thereof, and accommodates the plurality of battery cells 10. As shown in FIG. 1, the first battery cell group 10a and the second battery cell group 10b may be accommodated inside the housing 20. The housing 20 may accommodate the plurality of battery cells 10 in the battery pack 1, and may protect the battery cells from external impacts and the like. Although FIG. 1 illustrates the housing 20 as having a hollow rectangular parallelepiped shape, the shape of the housing 20 is not limited thereto.

The cover 30 is coupled to the opening formed at one side of the housing 20. Thus, the cover 30 is coupled to the housing 20 and covers the opening. The cover 30 may be joined to the housing 20 using a mechanical coupling method. For example, the cover 30 may be coupled to the housing 20 by bolting with nuts, riveting, or welding. In FIG. 1, the cover 30 is illustrated as having a roughly rectangular parallelepiped shape including a bend (e.g., a bent shape) therein. However, the present disclosure is not limited thereto, and the cover 30 may be formed as a flat or substantially flat plate.

The fire-resistant barrier assembly 40 is disposed below (e.g., under) the cover 30. According to an embodiment, the fire-resistant barrier assembly 40 may be disposed between the first battery cell group 10a and the second battery cell group 10b at a lower surface of the cover 30. As used herein, the "lower surface" may denote a surface facing the housing 20 in a third direction (e.g., the Z-axis direction).

According to an embodiment, the fire-resistant barrier assembly 40 may include a coupling member 41, a fire-resistant barrier 42, a metal weight 44, and a fixing member 46.

According to the present invention, fire-resistant barrier assembly 40 comprises a fire-resistant barrier 42; a metal weight 44; and a fixing member 46. The fire-resistant barrier 42 has one end connected to the cover 30 and extends in the first direction. The metal weight 44 is disposed at another end of the fire-resistant barrier 42. The fixing member 46 fixes the fire-resistant barrier 42 in a rolled state or a folded state.

The coupling member 41 may be disposed between the cover 30 and the fire-resistant barrier 42 to couple the fire-resistant barrier 42 to the cover 30. The coupling member 41 may be attached to the lower surface of the cover 30 by bonding, welding, bolting, or the like. The coupling member 41 may include a plastic material or a metal material.

The fire-resistant barrier 42 has one end connected to the cover 30 (e.g., via the coupling member 41), and extends in the first direction. One end of the fire-resistant barrier 42 may be fixed to the coupling member 41 by bolting or the like. Although one end of the fire-resistant barrier 42 may be connected to the cover 30 with the coupling member 41 interposed therebetween, the present disclosure is not limited thereto, and the fire-resistant barrier 42 may be connected directly to the cover 30 without using another member such as the coupling member 41.

According to an embodiment, the fire-resistant barrier 42 may be fixed to the coupling member 41 by the fixing member 46 while in a rolled state or a folded state. When the fixing member 46 melts, the fire-resistant barrier 42 unfolds and shields a space between the plurality of battery cells 10. Accordingly, when an ignition or an explosion occurs in some battery cells, an influence on the other battery cells may be blocked or delayed.

The metal weight 44 is disposed at another end of the fire-resistant barrier 42. For example, when the fire-resistant barrier 42 is in the unfolded state, the metal weight 44 may be disposed at a lower end of the fire-resistant barrier 42. When the fire-resistant barrier 42 is in the rolled or folded state, the metal weight 44 may be located at a center or below (e.g., under) the fire-resistant barrier 42. The metal weight 44 may serve to induce a descent of the fire-resistant barrier 42 when a fixation of the fire-resistant barrier 42 by the fixing member 46 is released. Therefore, the metal weight 44 may be heavier than the fire-resistant barrier 42, and may be produced or formed from a suitable material having a higher rigidity than that of the fire-resistant barrier 42.

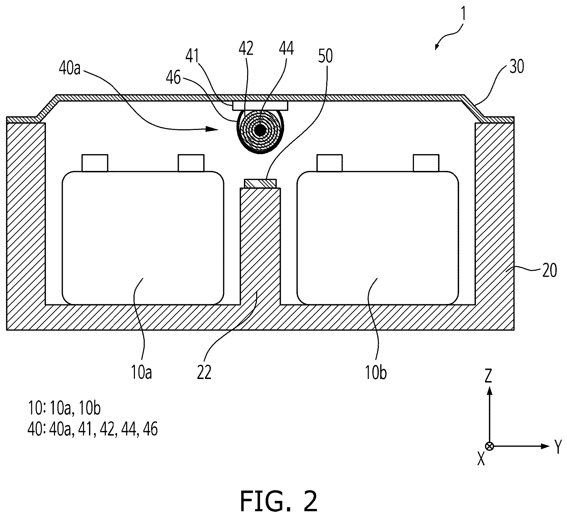

According to an embodiment, the battery pack 1 may further include a magnetic member (e.g., a magnetic member 50 of FIG. 2) disposed below (e.g., under) the metal weight 44. When the fire-resistant barrier 42 unfolds, the metal weight 44 may descend and may be attach to the magnetic member, so that the fire-resistant barrier 42 maintains or substantially maintains its shape and completely shields the space between the plurality of battery cells 10.

The fixing member 46 fixes the fire-resistant barrier 42 while in a rolled state or a folded state. It melts at a temperature greater than or equal to a threshold (e.g., a predetermined threshold). Thus, when a fire caused by a battery ignition occurs inside the battery pack 1, a melting of the fixing member 46 allows the fire-resistant barrier 42 to unfold and shield the space between the plurality of battery cells 10, thereby extinguishing or blocking the fire at an early stage.

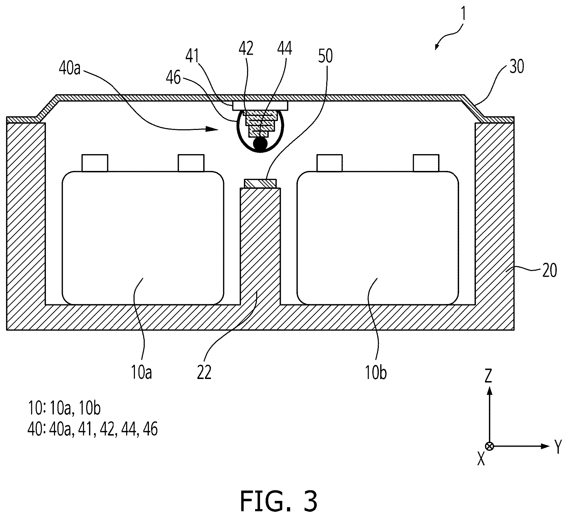

FIGS. 2 and 3 are schematic diagrams illustrating a first fire-resistant barrier assembly according to some embodiments of the present disclosure. FIGS. 2 and 3 may show an interior of the battery pack 1 of FIG. 1 when viewed in the X-axis direction (e.g., in a cross-sectional view). Hereinafter, redundant description as those above with respect to FIG. 1 may not be repeated.

Referring to FIGS. 2 and 3, the battery pack 1 may include the plurality of battery cells 10, the housing 20, the cover 30, the fire-resistant barrier assembly 40, and a magnetic member 50. The fire-resistant barrier assembly 40 may include a first fire-resistant barrier assembly 40a disposed between the first battery cell group 10a and the second battery cell group 10b. The first fire-resistant battery assembly 40a may include the coupling member 41, the fire-resistant barrier 42, the metal weight 44, and the fixing member 46.

The housing 20 may include a partition wall 22 disposed between the first battery cell group 10a and the second battery cell group 10b. The partition wall 22 may extend in the first direction. A height of the partition wall 22 may be lower than heights of the first battery cell group 10a and the second battery cell group 10b (e.g., in the Z-direction), thereby protecting the plurality of battery cells 10 housed inside the battery pack 1 from external impacts.

The fixing member 46 melts at a temperature greater than or equal to a threshold (e.g., a predetermined threshold). In an embodiment, the threshold may be a temperature of100 °C, so the melting point of the fixing member 46 may be greater than or equal to 100 °C. In another embodiment, the melting point may be 200 °C to 400 °C. In another embodiment, the melting point may be 100 °C to 400 °C, preferably 200 °C to 400°C. The fixing member 46 may be partially or entirely melted at a temperature greater than or equal to the threshold. Accordingly, when the plurality of battery cells 10 operate normally, the fixing member 46 may not melt, and may fix the fire-resistant barrier 42. In addition, when the plurality of battery cells 10 malfunction, the fixing member 46 may melt, thereby releasing a fixation by the fixing member 46, so that the fire-resistant barrier 42 may unfold.

The fixing member 46 may be arranged to surround (e.g., around a periphery of) at least a portion of the fire-resistant barrier 42. For example, the fixing member 46 may be connected to both ends (e.g., opposite ends) of the coupling member 41, and may be disposed so as to surround (e.g., around a periphery of) a lower portion of the fire-resistant barrier 42. The fixing member 46 may be coupled to both ends (e.g., opposite ends) of the coupling member 41 by a mechanical coupling means, such as a clip, loops and hooks (e.g., Velcro), or a cable tie. The fixing member 46 may be disposed at a center of the fire-resistant barrier 42, or may be disposed at each of both ends (e.g., each of opposite ends) of the fire-resistant barrier 42.

The fixing member 46 may include a polymer-based material. For example, the polymer-based material is selected of at least one of polyethylene terephthalate (PET), polycarbonate (PC), and/or nylon (PA). The material of the fixing member 46 may be determined or used according to a threshold temperature (e.g., a pre-determined threshold temperature). However, the material of the fixing member 46 is not limited thereto, and may include other suitable materials.

The magnetic member 50 may be disposed on an upper surface of the partition wall 22. Thus, in an embodiment, the magnetic member 50 is on an upper surface of the partition wall 22. A width of the magnetic member 50 may be less than or equal to that of the partition wall 22. In more detail, in the second direction (e.g., the Y-axis direction), a length of the magnetic member 50 may be less than or equal to that of the partition wall 22. The magnetic member 50 may include a permanent magnet. For example, the magnetic member 50 may include at least one of a ferrite magnet, a neodymium magnet, an AlNiCo magnet, or a samarium-cobalt magnet.

Referring to FIG. 2, the fire-resistant barrier 42 may be in a rolled state in a roll form. The fire-resistant barrier 42 may have a roll form about an axis extending in the first direction (e.g., the X-axis direction). The fire-resistant barrier 42 may have the roll form by being rolled upward from a lower end. Accordingly, in an unfolded state of the fire-resistant barrier 42, the metal weight 44 disposed at the lower end of the fire-resistant barrier 42 may be located at a center of the fire-resistant barrier 42 in the rolled state. The lower end of the fire-resistant barrier 42 may correspond to another end (e.g., an opposite end) of the fire-resistant barrier 42 in FIG. 1.

Referring to FIG. 3, the fire-resistant barrier 42 may be in a folded state in a zigzag form, and the metal weight 44 may be located below (e.g., under) the fire-resistant barrier 42 in the folded state. The fire-resistant barrier 42 may have a zigzag-folded form in a second direction (e.g., the Y-axis direction). In an example, an interval of fold portions of the fire-resistant barrier 42 may gradually increase from a lower end to an upper end, so that the folded fire-resistant barrier 42 has an approximately inverted-triangle shape. The lower end and the upper end of the fire-resistant barrier 42 may correspond to the other end and one end, respectively, of the fire-resistant barrier 42 in FIG. 1.

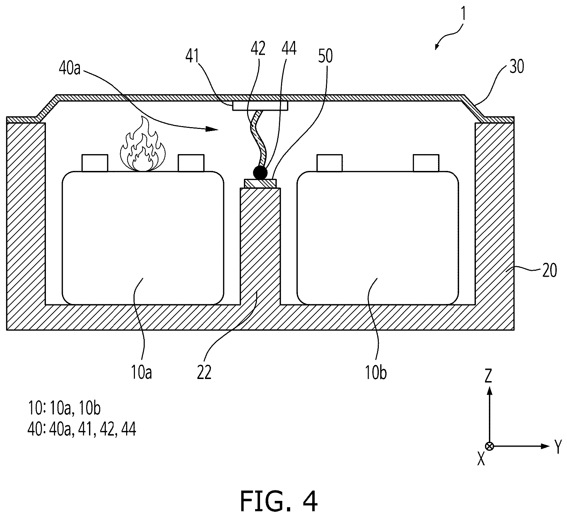

FIG. 4 is a schematic diagram illustrating an operation of a fire-resistant barrier assembly according to an embodiment of the present disclosure. FIG. 4 may illustrate an interior of the battery pack 1 of FIG. 1 when viewed in the X-axis direction (e.g., in a cross-sectional view). Hereinafter with reference to FIG. 4, redundant description as those above with reference to FIGS. 1 to 3 may not be repeated.

Referring to FIG. 4, a fire may occur due to a battery ignition in the first battery cell group 10a or the second battery cell group 10b, so that the fixing member (e.g., the fixing member of 46 FIG. 2) may melt. When the fixing member melts, the fire-resistant barrier 42 may unfold or unroll to shield a space between the first battery cell group 10a and the second battery cell group 10b.

The fire-resistant barrier 42 may have a rectangular cloth shape, and may include a non-combustible material having non-flammable properties. For example, the fire-resistant barrier 42 may include at least one of an aramid fiber, a polybenzimidazole fiber (PBI), a silica fabric, a ceramic fiber, a carbon fiber, and/or a graphite fiber. Because the fire-resistant barrier 42 includes at least one of the above non-combustible materials, the fire-resistant barrier 42 may unfold or unroll from above the first battery cell group 10a and above the second battery cell group 10b to shield the space between the first battery cell group 10a and the second battery cell group 10b, and may suppress a fire in the battery pack 1 at an early stage.

In an embodiment, the fire-resistant barrier 42 may be rectangular in an unfolded or unrolled state. In more detail, in the unfolded or unrolled state, the fire-resistant barrier 42 may include first and second long sides opposite from and spaced apart from each other, and first and second short sides opposite from and spaced apart from each other and shorter than the first and second long sides. Each of the first long side and the second long side may be orthogonal to each of the first short side and the second short side. The first long side of the fire-resistant barrier 42 may be connected to the coupling member 41, and the metal weight 44 may be disposed at the second long side. The first long side and the second long side of the fire-resistant barrier 42 may correspond to one end and another end, respectively, of the fire-resistant barrier 42 in FIG. 1.

The metal weight 44 may be formed of a ferromagnetic material in order to attach to the magnetic member 50. For example, the metal weight 44 may include at least one of various suitable metals or alloys, such as iron (Fe), nickel (Ni), cobalt (Co), steel, stainless steel, and/or AlNiCo. Accordingly, when the fire-resistant barrier 42 unfolds and the metal weight 44 descends, the metal weight 44 may be attached (e.g., may be readily attached) to the magnetic member 50.

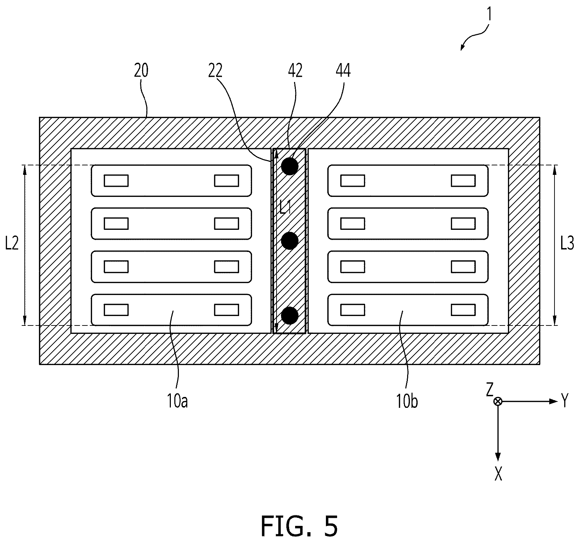

FIG. 5 is a top view illustrating a battery pack according to an embodiment of the present disclosure. FIG. 5 may show the interior of the battery pack 1 when viewed in the Z-axis direction (e.g., in a plan view). Hereinafter, redundant description as those above with reference to FIGS. 1 to 4 may not be repeated.

Referring to FIG. 5, the partition wall 22 of the housing 20 and the fire-resistant barrier 42 may be disposed between the first battery cell group 10a and the second battery cell group 10b. The fire-resistant barrier 42 may include the metal weight 44 disposed at a lower end of the fire-resistant barrier 42. Although FIG. 5 illustrates the battery pack 1 as including two battery cell groups (e.g., the first battery cell group 10a and the second battery cell group 10b) the present disclosure is not limited thereto. Accordingly, the battery pack 1 may include three or more battery cell groups. In addition, the first battery cell group 10a and the second battery cell group 10b may each include a plurality of battery cells that are electrically connected in series or in parallel, and the first battery cell group 10a and the second battery cell group 10b may be electrically connected to each other in series or in parallel.

According to an embodiment, the metal weight 44 may include a plurality of sub-metal weights 44 spaced apart from one another in the first direction (e.g., the X-axis direction). The plurality of sub-metal weights 44 may be arranged symmetrically or substantially symmetrically with respect to a center of the fire-resistant barrier 42. For example, the plurality of sub-metal weights 44 may be disposed at a middle portion and at both ends (e.g., opposite ends) of the fire-resistant barrier 42. The plurality of sub-metal weights 44 may be disposed at equal or substantially equal intervals from one another. Accordingly, the fire-resistant barrier 42 may unfold or unroll uniformly or substantially uniformly, so that a shape of the fire-resistant barrier 42 may not be distorted, and the space between the first battery cell group 10a and the second battery cell group 10b may be completely shielded.

According to an embodiment, a length L1 of the fire-resistant barrier 42 in the first direction (e.g., the X-axis direction) may be greater than a length L2 of the first battery cell group 10a in the first direction and a length L3 of the second battery cell group 10b in the first direction. The length L1 of the fire-resistant barrier 42 in the first direction may correspond to a length of the partition wall 22.

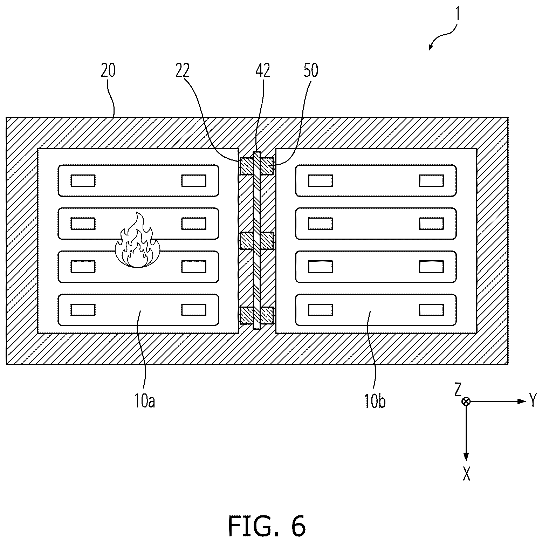

FIG. 6 is a schematic diagram illustrating an operation of a fire-resistant barrier assembly according to an embodiment of the present disclosure. FIG. 6 may show the interior of the battery pack 1 when viewed in the Z-axis direction (e.g., in a plan view). Hereinafter, redundant description as those above with reference to FIGS. 1 to 5 may not be repeated.

Referring to FIG. 6, when a fire caused by a battery ignition occurs in the first battery cell group 10a or the second battery cell group 10b, the fixing member 46 may melt. When the fixing member 46 melts, the fire-resistant barrier 42 may unfold or unroll, and may shield the space between the first battery cell group 10a and the second battery cell group 10b.

The magnetic member 50 may be disposed on an upper surface of the partition wall 22 so as to correspond to a lower side of the metal weight (e.g., the metal weight 44 of FIG. 5). The magnetic member 50 may include a plurality of sub-magnetic members 50 spaced apart from one another in the first direction (e.g., the X-axis direction). The plurality of sub-magnetic members 50 may be arranged symmetrically or substantially symmetrically with respect to a center of the fire-resistant barrier 42. For example, the plurality of sub-magnetic members 50 may be disposed at a middle portion and at both ends (e.g., opposite ends) of the fire-resistant barrier 42. The plurality of sub-magnetic members 50 may be arranged at equal or substantially equal intervals from one another. Accordingly, when the fire-resistant barrier 42 unfolds or unrolls, and the metal weight descends, the metal weight may be attached to the magnetic member 50.

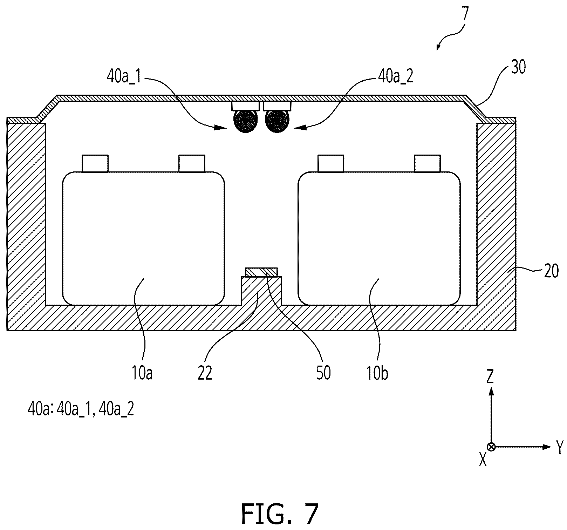

FIG. 7 is a schematic diagram illustrating a first fire-resistant barrier assembly formed of a plurality of assemblies according to an embodiment of the present disclosure. FIG. 7 may show the interior of the battery pack 7 when viewed in the X-axis direction (e.g., in a cross-sectional view). Hereinafter, redundant description as those above with reference to FIGS. 2 to 6 may not be repeated.

Referring to FIG. 7, the partition wall 22 of the housing 20 may be disposed between the first battery cell group 10a and the second battery cell group 10b. The first fire-resistant barrier assembly 40a may be disposed between the first battery cell group 10a and the second battery cell group 10b.

A height of the partition wall 22 may be lower than one half of a height of the first battery cell group 10a, and lower than one half of a height of the second battery cell group 10b. The magnetic member 50 may be disposed on an upper surface of the partition wall 22.

The first fire-resistant barrier assembly 40a may include a (1_1)-th fire-resistant barrier assembly 40a_1 and a (1_2)-th fire-resistant barrier assembly 40a_2 that are disposed adjacent to each other in the second direction (e.g., the Y-axis direction). The (1_1)-th fire-resistant barrier assembly 40a_1 and the (1_2)-th fire-resistant barrier assembly 40a_2 may be disposed above the magnetic member 50. The (1_1)-th fire-resistant barrier assembly 40a_1 and the (1_2)-th fire-resistant barrier assembly 40a_2 may be arranged in parallel or substantially in parallel with the first direction (e.g., the X-axis direction). Although FIG. 7 illustrates the first fire-resistant barrier assembly 40a as including the (1_1)-th fire-resistant barrier assembly 40a_1 and the (1_2)-th fire-resistant barrier assembly 40a_2, the present disclosure is not limited thereto, and additional fire-resistant barrier assemblies may be disposed adjacent to each other in the second direction (e.g., the Y-axis direction).

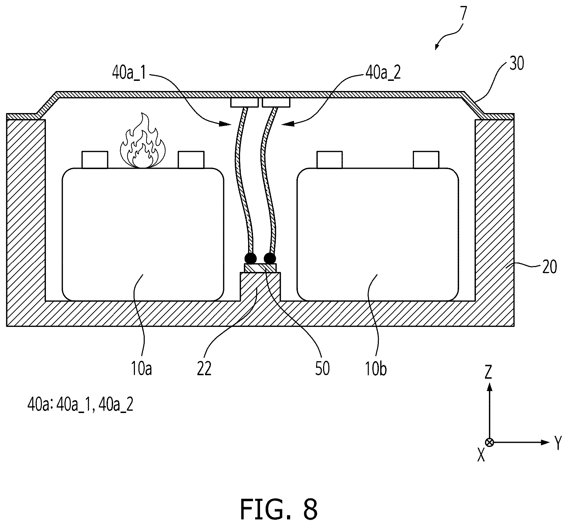

FIG. 8 is a diagram illustrating an operation of a fire-resistant barrier assembly according to an embodiment of the present disclosure. FIG. 8 may show the interior of the battery pack 7 when viewed in the X-axis direction. Hereinafter, redundant description as those above with reference to FIGS. 2 to 7 may not be repeated.

Referring to FIG. 8, a fire may occur due to a battery ignition in the first battery cell group 10a or the second battery cell group 10b, so that the fixing member (e.g., the fixing member 46 of FIG. 2) may melt. When the fixing member 46 melts, the (1_1)-th fire-resistant barrier assembly 40a_1 and the (1_2)-th fire-resistant barrier assembly 40a_2 may operate to shield a space between the first battery cell group 10a and the second battery cell group 10b.

The (1_1)-th fire-resistant barrier assembly 40a_1 and the (1_2)-th fire-resistant barrier assembly 40a_2 may unfold or unroll without interfering with each other. Thereafter, a metal weight of the (1_1)-th fire-resistant barrier assembly 40a_1 and a metal weight of the (1_2)-th fire-resistant barrier assembly 40a_2 may be attached to the magnetic member 50.

Accordingly, even if a fire occurs inside the battery pack 7, the (1_1)-th fire-resistant barrier assembly 40a_1 and the (1_2)-th fire-resistant barrier assembly 40a_2 may more reliably prevent a thermal deterioration generated in the first battery cell group 10a or the second battery cell group 10b from propagating.

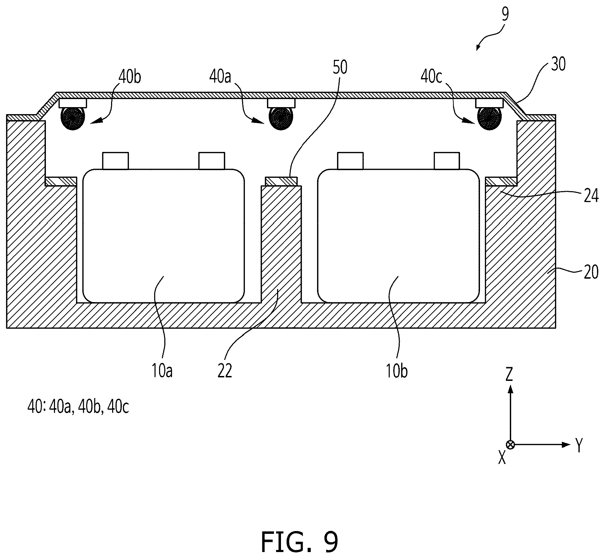

FIG. 9 is a schematic diagram illustrating a second fire-resistant barrier assembly and a third fire-resistant barrier assembly disposed outside of battery cells according to an embodiment of the present disclosure. FIG. 9 may show the interior of the battery pack 9 when viewed in the X-axis direction (e.g., in a cross-sectional view). Hereinafter, redundant description as those above with reference to FIGS. 2 to 8 may not be repeated.

Referring to FIG. 9, the fire-resistant barrier assembly 40 may further include a second fire-resistant barrier assembly 40b and a third fire-resistant barrier assembly 40c disposed outside of the first battery cell group 10a and the second battery cell group 10b. As used herein, the term "outside" may denote a direction away from the partition wall 22 in the second direction (e.g., the Y-axis direction).

According to an embodiment, the housing 20 may include a stepped portion 24 formed below (e.g., under) the second fire-resistant barrier assembly 40b and a stepped portion 24 below (e.g., under) the third fire-resistant barrier assembly 40c. An upper surface of the stepped portion 24 may be parallel to or substantially parallel to an upper surface of the partition wall 22. A height of the upper surface of the stepped portion 24 may correspond to a height of the upper surface of the partition wall 22. As used herein, the term "correspond" may mean that the height of the upper surface of the stepped portion 24 is the same as or substantially the same as (e.g., within a suitable tolerance or a predetermined tolerance) the height of the upper surface of the partition wall 22. However, the height of the upper surface of the stepped portion 24 is not limited thereto, and may be greater than or less than the height of the upper surface of the partition wall 22.

According to an embodiment, the second fire-resistant barrier assembly 40b and the third fire-resistant barrier assembly 40c may be disposed on an outer side of the cover 30. The second fire-resistant barrier assembly 40b and the third fire-resistant barrier assembly 40c may be arranged parallel to or substantially parallel to the first direction (e.g., the X-axis direction). The second fire-resistant barrier assembly 40b and the third fire-resistant barrier assembly 40c may be disposed on a lower surface of the cover 30 in parallel or substantially in parallel with the first fire-resistant barrier assembly 40a.

According to an embodiment, the magnetic member 50 may be disposed on an upper surface of the stepped portion 24. The magnetic member 50 may be disposed below each of the second fire-resistant barrier assembly 40b and the third fire-resistant barrier assembly 40c.

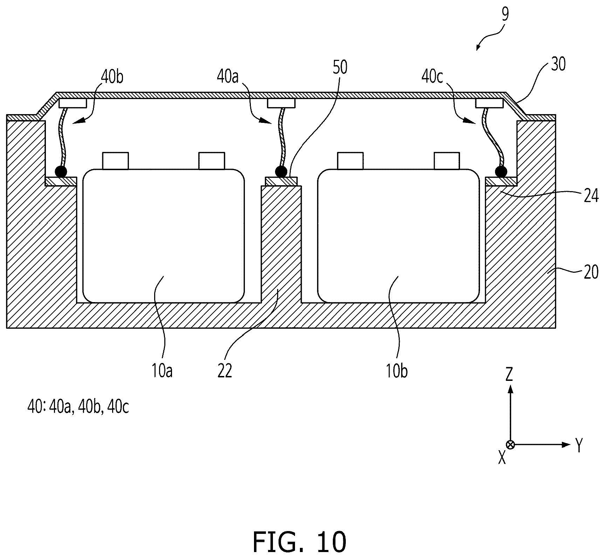

FIG. 10 is a schematic diagram illustrating an operation of a fire-resistant barrier assembly according to an embodiment of the present disclosure. FIG. 10 may show the interior of the battery pack 9 when viewed in the X-axis direction (e.g., in a cross-sectional view). Hereinafter, redundant description as those above with reference to FIGS. 2 to 9 may not be repeated.

Referring to FIG. 10, a fire may occur due to a battery ignition in the first battery cell group 10a or the second battery cell group 10b, so that the fixing member (e.g., the fixing member 46 of FIG. 2) may melt. When the fixing member melts, the second fire-resistant barrier assembly 40b and the third fire-resistant barrier assembly 40c may operate to further shield outer spaces of the first battery cell group 10a and the second battery cell group 10b.

The second fire-resistant barrier assembly 40b may shield a space between the first battery cell group 10a and an opening of the housing 20. The third fire-resistant barrier assembly 40c may shield a space between the second battery cell group 10b and an opening of the housing 20. Accordingly, a flame generated in the first battery cell group 10a or the second battery cell group 10b may be prevented from being exposed to the outside the battery pack 9, and an oxygen supply may be blocked to extinguish the flame generated in the first battery cell group 10a or the second battery cell group 10b.

The foregoing is illustrative of some embodiments of the present disclosure, and is not to be construed as limiting thereof. It will be understood that descriptions of features or aspects within each embodiment should typically be considered as available for other similar features or aspects in other embodiments, unless otherwise described. Thus, as would be apparent to one of ordinary skill in the art, features, characteristics, and/or elements described in connection with a particular embodiment may be used singly or in combination with features, characteristics, and/or elements described in connection with other embodiments unless otherwise specifically indicated.

## Claims

1. A battery pack (1, 7, 9) comprising:
a plurality of battery cells (10) along a first direction;
a housing (20) having an opening at one side, and accommodating the plurality of battery cells (10);
a cover (30) coupled to the housing (20) and covering the opening; and
a fire-resistant barrier assembly (40) below the cover (30), and comprising:
a fire-resistant barrier (42) having one end connected to the cover (30), and extending in the first direction;
a metal weight (44) at another end of the fire-resistant barrier (42); and
a fixing member (46) fixing the fire-resistant barrier (42) in a rolled state or a folded state,
wherein the fixing member (46) is configured to melt at a temperature greater than or equal to a threshold, and
wherein the fire-resistant barrier (42) is configured to unfold or unroll to shield a space between the plurality of battery cells (10) when the fixing member (46) is melted.

2. The battery pack (1, 7, 9) as claimed in claim 1, further comprising a magnetic member (50) below the metal weight (44).

3. The battery pack (1, 7, 9) as claimed in claim 2, wherein the metal weight (44) is configured to descend and attach to the magnetic member (50) when the fire-resistant barrier (42) unfolds or unrolls.

4. The battery pack (1, 7, 9) as claimed in any of claims 1 to 3, wherein the plurality of battery cells (10) comprises a first battery cell group (10a) and a second battery cell group (10b) spaced from each other in a second direction crossing the first direction.

5. The battery pack (1, 7, 9) as claimed in claim 4, wherein the fire-resistant barrier assembly (40) comprises a first fire-resistant barrier assembly (40a) between the first battery cell group (10a) and the second battery cell group (10b).

6. The battery pack (1, 7, 9) as claimed in claim 4 or 5, wherein a length (L1) of the fire-resistant barrier (42) in the first direction is greater than a length (L2) of the first battery cell group (10a) in the first direction and a length (L3) of the second battery cell group (10b) in the first direction.

7. The battery pack (1, 7, 9) as claimed in any of claims 4 to 6, wherein the housing (20) comprises:
a partition wall (22) between the first battery cell group (10a) and the second battery cell group (10b).

8. The battery pack (1, 7, 9) as claimed in claim 7, wherein the magnetic member (50) is on an upper surface of the partition wall (22).

9. The battery pack (7) as claimed in any of claims 5 to 8, wherein the first fire-resistant barrier assembly (40a) comprises a (1_1)-th fire-resistant barrier assembly (40a_1) and a (1_2)-th fire-resistant barrier assembly (40a_2) adjacent to each other in the second direction.

10. The battery pack (9) as claimed in any of claims 5 to 8, wherein the fire-resistant barrier assembly (40) further comprises:
a second fire-resistant barrier assembly (40b) and a third fire-resistant barrier assembly (40c) located outside the first battery cell group (10a) and the second battery cell group (10b).

11. The battery pack (9) as claimed in claim 10, wherein the housing (20) comprises a stepped portion (24) below the second fire-resistant barrier assembly (40b), and a stepped portion (24) below the third fire-resistant barrier assembly (40c).

12. The battery pack (9) as claimed in claim 10 or 11, wherein the magnetic member (50) is on an upper surface of the stepped portions (24).

13. The battery pack (1, 7, 9) as claimed in any of claims 1 to 12, wherein the metal weight (44) comprises a plurality of sub-metal weights (44) spaced from each other in the first direction.

14. The battery pack (1, 7, 9) as claimed in any of claims 1 to 13, wherein the fixing member (46) has a melting point greater than or equal to 100°C.

15. The battery pack (1, 7, 9) as claimed in any of claims 1 to 14, wherein the fixing member (46) comprises a polymer-based material.
